# NEUE EUROPÄISCHE PATENTSCHRIFT

(11) **EP 2 301 344 B2**
(45) Veröffentlichungstag und Bekanntmachung des Hinweises auf die Entscheidung über den Einspruch: **15.01.2020**
(45) Hinweis auf die Patenterteilung: 30.11.2011
(21) Anmeldenummer: 09169387.9
(22) Anmeldetag: 03.09.2009
(51) Int. Cl.: A01N 25/24, A01N 33/04, B27N 3/00, C08G 18/64, C08G 18/76, C08L 97/02, C09J 179/02

(54) **Fungizid wirksames Holzschutzmittel zur Verwendung in Holzfaserplatten**
Wood protection agent as fungicide for use in wood fibre boards
Produit de protection du bois fongicide pour l'utilisation dans des plaques de fibres de bois

(43) Veröffentlichungstag der Anmeldung: 30.03.2011
(73) Patentinhaber: SWISS KRONO Tec AG, 6006 Luzern (CH)
(72) Erfinder:
(74) Vertreter: Maikowski & Ninnemann Patentanwälte Partnerschaft mbB

(56) Entgegenhaltungen:
- EP-A1- 1 192 223
- WO-A-99/30882
- WO-A-2008/012113
- WO-A-2009/027297
- WO-A1-2007/082837
- DUNKY, M.: "Holzwerkstoffe und Leime: Technologie und Einflussfaktoren", 2002, Springer pages 145,146,192-193,247,282,283,386-390,

## Beschreibung

Die Erfindung betrifft die Verwendung einer Zusammensetzung von mindesten zwei Bindemitteln als fungizides Holzschutzmittel nach Anspruch 1.

Die Nachfrage nach leichten Holzwerkstoffen (HWS) zur Verwendung als Dämmmaterialien ist ansteigend. Hierfür gibt es unterschiedliche Gründe. Zum einen ist die Verwendung von Holz als nachwachsender Rohstoff unter ökologischen Aspekten vorteilhaft. Zum anderen besitzt Holz beziehungsweise besitzen Holzfasern eine hohe Wärmekapazität, was zu einer großen Phasenverschiebung der Temperatur führt, d.h. der Zeitraum zwischen dem Auftreten der höchsten Temperatur auf der Außenoberfläche eines Bauteils aus Holz bis zum Erreichen der höchsten Temperatur auf der Innenseite des Holzes ist relativ lang.

Auf der anderen Seite besitzen Dämmstoffe auf Holzbasis jedoch auch einige Nachteile, die einen uneingeschränkten Einsatz verhindern. Im Gegensatz zu vielen anderen Dämmstoffen, wie z.B. Steinwolle oder Mineralwolle weisen Holzdämmstoffe eine erhöhte Entflammbarkeit und Feuchtempfindlichkeit auf.

Insbesondere während des Einbaus der Dämmstoffplatten in Neubauten sind die Platten oft einer hohen Feuchte oder sogar direkter Wassereinwirkung ausgesetzt, wodurch die Entstehung und Ansiedlung von Schimmel und anderen Mikroorganismen auf oder in den Platten forciert wird. Dies ist insbesondere dadurch bedingt, dass bei der Herstellung der Holzfasern für die Holzdämmstoffe während des Holzaufschlusses Holzzucker (Xylose) freigesetzt wird, welcher besonders gut von Pilzen metabolisiert wird.

Zur Schimmelbekämpfung können zum Beispiel bekannte Biozide, wie 3-Jod-2-Propinyl-butylcarbamat (IPBC) oder Triazole (Propiconazol, Tebuconazol) verwendet werden. Der Einsatz von üblicherweise für Außenräume verwendeten toxikologisch relevanten Bioziden in Innenräumen beziehungsweise in innenräumennahen Bereichen ist jedoch aufgrund von toxikologischen Vorgaben nicht möglich. Zudem müssen Produkte, die Biozide enthalten, gekennzeichnet werden, was zu einer Verschlechterung der Marktchancen des entsprechenden Produktes führt.

Eine Möglichkeit zur Reduzierung und Bekämpfung von Schimmel in Holzfaserplatten besteht in der Verwendung von aminogruppenhaltigen Polymeren als Holzschutzmittel, wobei die Polymere bevorzugt in polykationischer Form vorliegen (WO 2009/092775 A2). Als zum Holzschutz einsetzbare Polymere werden unter anderem Polyalkylenimine, Polyvinylpyridin, Polyvinylimidazol oder derivatisierte Hydroxyalkylzellulose beschrieben. Diese Verbindungen werden als Bestandteil eines Lackes oder einer Holzschutzfarbe auf das Holz aufgetragen bzw. das Holz mit einer Lösung aus den genannten Verbindungen imprägniert wird.

Die Verwendung von Polyalkyleniminen, insbesondere Polyethylenimin, als Bindemittel ist unter anderem aus der WO 2009/027297 A2 bekannt. Hier wird ein Verfahren zur Herstellung von Faserwerkstoffen beschrieben, wobei den Faserwerkstoffen mindestens eine Proteinmischung aus hydrolytisch wirksamen Enzymen und mindestens ein polyiminhaltiges Bindemittel zugesetzt werden.

In der WO 99/30882 A1 werden Formkörper aus Holzteilchen und einem Bindemittel auf Basis von Polyurethan offenbart. Das verwendete Bindemittel ist ein Reaktionsprodukt aus einem Polyol oder Polyamin mit mindestens einem Polyisocynat, wobei als Treibmittel zur Porenbildung noch mindestens eine Carbonsäure zugesetzt wird.

Die WO 2008/0 1213 A2 beschreibt Holzwerkstoffe, die Polyamin als Bindemittel enthalten oder ein von Polyamin verschiedenes Bindemittel enthalten und zusätzlich in oder auf den äußeren Schichten des Holzwerkstoffes Polyamin aufweisen. Die wässrige Polyaminlösung kann durch verschiedene Maßnahmen auf den Holzwerkstoff aufgebracht werden, wie zum Beispiel Aufsprühen, Walzen, Tauchen oder Coating.

Weitere üblicherweise verwendete Bindemittel basieren auf synthetischen Harzen, wie zum Beispiel Diisocyanaten oder Harnstoff-, Phenol- oder Melamin-Formaldehyd-Harzen.

Neben einer möglichen Schimmelbildung kann es durch hohe Feuchtigkeitsgrade ebenfalls zu einer Hydrolyse der verwendeten Bindemittel kommen, was in der Vergangenheit insbesondere durch die Verwendung von Bindemitteln auf der Basis von Polymeren Diphenlymethandiisocyanat (PMDI) verhindert bzw. reduziert wurde. Der Einsatz eines hydrolysebeständigen Bindemittels verminderte ebenfalls Dimensionsänderungen der Faserplatten, was ansonsten zu einer Verschlechterung der Dämmwirkung führen würde.

Der vorliegenden Erfindung liegt nunmehr die Aufgabe zu Grunde, eine Holzfaserdämmstoffplatte, d.h. einen Dämmstoff auf der Basis von Holzfasern herzustellen, der eine höhere Resistenz gegen Schimmelbefall aufweist, wobei auf die Verwendung von toxikologischen Bioziden verzichtet wird. Gleichzeitig ist es eine Aufgabe der Erfindung, die bei der Herstellung der Holzfaserdämmstoffplatten angewendeten Produktionsparameter unverändert zu lassen, so dass sich das Produkt weder in seinen Eigenschaften noch in seinen Kosten ändert. Es soll also auf die Implementierung von weiteren Verfahrensschritten in den Herstellungsprozess verzichtet werden.

Von weiterer Bedeutung ist in diesem Zusammenhang, dass der Schutz des Dämmstoffes gegen Schimmelbefall insbesondere in der Phase der Trocknung eines neuen Gebäudes nach Fertigstellung des Baues gewährleistet sein sollte. Nach Baufertigstellung treten üblicherweise keine Schimmelprobleme mehr auf, da der Neubau durch Heizen und Lüften getrocknet ist. Daher handelt es sich um einen relativ kurzen Zeitraum, in dem der Schutz der Holzfaserdämmstoffplatten vor Befall mit Schimmel oder anderen Mikroorganismen gewährleistet sein sollte. Jedoch treten in diesem kurzen Zeitraum häufig Probleme auf, da Gebäude in der Regel in den feuchten Herbstmonaten fertig gestellt werden, in welchen das Mauerwerk und andere Bauteile vergleichsweise langsam trocknen.

Diese Aufgabe wird erfindungsgemäß dadurch gelöst, dass eine Zusammensetzung umfassend mindestens ein erstes Bindemittel und ein zweites Bindemittel als fungizides Holzschutzmittel für Holzfaserdämmstoffplatten verwendet wird, wobei das mindestens erste Bindemittel ein Isocyanat ist, das mindestens zweite Bindemittel ein Polyimin ist, wobei das mindestens eine Isocyanat und das mindestens eine Polyimin in einem Mischungsverhältnis bezogen auf die Masse von 10:1 bis 50:1 eingesetzt werden, und wobei die Zusammensetzung während des Herstellungsprozesses der Holzfaserdämmstoffplatte durch Inkontaktbringen von für die Herstellung der Holzfaserdämmstoffplatte verwendeten Holzfasern mit der Zusammensetzung unmittelbar in die Holzfaserdämmstoffplatte eingebracht wird.

Das mindestens eine erste Bindemittel Isocyanat und das mindestens eine Polyimin als zweites Bindemittel liegen in der Zusammensetzung bevorzugt separat vor, d.h. beide Bindemittel reagieren nicht miteinander. Die erfindungsgemäße Zusammensetzung kann daher auch als eine Mischung der separaten Komponenten beschrieben werden.

Bevorzugt ist das Isocyanat als erstes Bindemittel ausgewählt aus einer Gruppe enthaltend aliphatische und aromatische Isocyanate.

Typischerweise können als aliphatische Isocyanate z.B. Hexamethylendiisocyanat (HDI), Isophorondiisocyanat (IPDI) und/oder 1,4-Cyclohexyldiisocyanat (CHDI) verwendet werden.

Als bevorzugte aromatische Polyisocyanate können Polymeres Diphenylmethandiisocyanat (PMDI) Toluylendiisocyanat (TDI) und/oder Diphenylmethandiisocyanat (MDI) zum Einsatz kommen, wobei PMDI besonders bevorzugt ist.

Das Isocyanat unterliegt bei seiner Verwendung als Bindemittel zwei chemischen Reaktionen. Zum einen bildet es in Gegenwart von Wasser Polyharnstoff aus. Parallel erfolgt die Anbindung an die Holzfasern durch Ausbildung einer Urethan-Bindung durch die Reaktion von Isocyanate mit den freien HydroxyGruppen der Zellulose.

Unter den Polyiminen wird die Verwendung von Polyalkyleniminen bevorzugt. Polyalkylenimine sind geradlinige oder verzweigte, sekundäre und tertiäre Aminogruppen enthaltene Polymere. In einer Ausführungsform umfasst die Zusammensetzung mindestens ein Polyalkylenimin, wobei die Stickstoffatome durch C₁-C₁₈, bevorzugt C₂-C₈ gesättigte, ungesättigte, geradlinige und/oder verzweigte Kohlenwasserstoffketten verbunden sind. Die Polyalkylenimine können des Weiteren substituiert vorliegen und weitere Derivatisierungen aufweisen. Beispielsweise können die Polyalkylenimine mit Säuren, wie z.B. Fettsäuren oder gesättigten und ungesättigte Carbonsäuren, Anhydriden, Säurechloriden oder Säureamiden, vorliegen.

In einer besonders bevorzugten Ausführungsform umfasst die Zusammensetzung mindestens ein Polyethylenimin als Polyimin. Die Polyethylenimine können in Form von quaternisierten Verbindungen vorliegen. Als weitere geeignete Polyethylenimine haben sich phosphonemethylierte und alkoxylierte Polyethylenimine erwiesen.

Die verwendeten Polyethylenimine weisen bevorzugt ein mittleres Molgewicht zwischen 300 bis 10 000 g/mol, bevorzugt zwischen 500 bis 5000 g/mol, insbesondere bevorzugt von 800 g/mol auf.

Bevorzugt wird eine Zusammensetzung verwendet, in der das mindestens eine erste Bindemittel Isocyanat, und das mindestens eine Polyimin als zweites Bindemittel in einem Mischungsverhältnis bezogen auf die Masse bevorzugt von 15:1 bis 40: 1, insbesondere bevorzugt von 18:1 zu 30:1 vorliegen.

Die fungizide Wirksamkeit der erfindungsgemäßen Zusammensetzung ist als überraschend anzusehen, da es nicht zu erwarten war, dass insbesondere das verwendete Polyethylenimin während des Herstellungsprozesses der Holzfaserdämmstoffplatte keiner Strukturveränderung unterliegt. Überraschenderweise erfolgt keine Reaktion des ersten Bindemittels mit dem Polyethylenimin. So erfolgt z.B. bei Verwendung von PMDI als Polyethylenimin. So erfolgt z.B. bei Verwendung von PMDI als erstes Bindemittel keine Reaktion mit dem Polyethylenimin, obwohl beide Komponenten aufgrund ihrer funktionellen Gruppen -NCO und -NH sehr schnell zu Polyharnstoffen reagieren könnten. Das Polyethylenimin wird also während des Herstellungsprozesses nicht modifiziert oder zerstört und behält somit seine fungiziden Eigenschaften in der fertigen Faserplatte.

Die Bindemittelmenge wird bei der Herstellung der Holzfaserdämmstoffplatten konstant gehalten, d.h. die Menge an verwendetem ersten Bindemittel, wie PMDI, wird um die Menge an zugesetztem Polyethylenimin reduziert.

Die Zusammensetzung wird als Bindemittel in einem Verfahren zur Herstellung von Holzfaserdämmstoffplatten mit fungiziden Eigenschaften verwendet, welches die folgenden Verfahrensschritte umfasst:
a) Herstellen von Holzfasern aus Holzhackschnitzeln,
b) Inkontaktbringen der Holzfasern mit einer Zusammensetzung umfassend mindestens ein Isocyanat als erstes Bindemittel und mindestens ein Polyimin als zweites Bindemittel mit den vorher beschriebenen Merkmalen, wobei zusätzlich zu der Bindemittelzusammensetzung aus erstem Bindemittel und Polyimin als zweitem Bindemittel Polyimin unmittelbar vor dem Verpressen auf die Fasermatte auf die Fasermatte aufgetragen wird, und
c) Streuen der Mischung aus Holzfasern und der Zusammensetzung aus dem mindestens einen ersten Bindemittel und dem mindestens einen Polyimin aus Schritt b) auf ein Transportband und Verpressen der gebildeten Fasermatte.

Zur Herstellung der Holzfasern gemäß a) werden zunächst Holzhackschnitzel gereinigt, anschließend zerfasert und getrocknet.

Das Inkontaktbringen der Holzfasern mit der erfindungsgemäßen Zusammensetzung in Schritt b) erfolgt bevorzugt in einem Blow-Line-Verfahren, bei dem die beiden Bindemittel während der Dosierung in der Blow-line gemischt und in den Holzfaserstrom eingespritzt werden. Die beiden Bindemittel können auch nacheinander mit dem Holzfaserstrom kontaktiert werden. Dabei erfolgt bereits eine leichte Aushärtung der Mischung an der Faseroberfläche, was jedoch unproblematisch ist, da beim anschließenden Verpressen noch genügend reaktiver Leim zur Verfügung steht. Dieses Verfahren führt zu einer sehr homogenen Leimverteilung.

Es ist auch möglich die Zusammensetzung mittels Trockenbeleimung mit den Holzfasern in Kontakt zu bringen. Die Zusammensetzung wird hier durch extrem feines Verdüsen auf die getrockneten Holzfasern aufgebracht. Da der thermisch intensive Trocknungsprozess im Wesentlichen vor der Beleimung stattfindet, ist der Leimverbrauch deutlich geringer als bei der Blow-Line-Beleimung bei weitgehend homogener Leimverteilung.

Nach Streuen der Mischung aus Holzfasern und Bindemitteln auf ein Transportband unter Ausbildung einer Holzfasermatte erfolgt zunächst ein Vorpressen, bei der die Dicke der Matte im Rahmen einer kalten Vorverdichtung reduziert wird. Anschließend wird eine Mattenbesäumung durchgeführt, bei welcher Seitenstreifen von der Fasermatte abgetrennt werden; die Seitenstreifen werden in den Prozess zurückgeführt. Die anschließende Heißpressung der Fasermatte wird üblicherweise bei Temperaturen zwischen 150 bis 230°C durchgeführt, wobei die Bindemittel aktiviert werden und eine feste Verbindung zwischen den Holzfasern und dem Bindemittel ausgebildet wird. In der Endbearbeitung wird die Fasermatte schließlich auf die gewünschten Maße reduziert und gekühlt.

Es ist ebenfalls möglich, dass das mindestens eine Polyimin erst oder zusätzlich unmittelbar vor dem Verpressen auf die Fasermatte aufgetragen wird. Dies kann bevorzugt zusätzlich zum Beleimungsschritt gemäß b) erfolgen. Hierdurch wird ein zusätzlicher Schutz, insbesondere der äußeren Schichten der Holzfaserplatten gegen Schimmelbefall erreicht.

Die Zusammensetzung kann auch in einem Verfahren verwendet werden, bei welchem den Holzfasern weitere Bindemittel wie Granula aus Kunststoff zugesetzt werden.

Die Holzfaserdämmstoffplatten sind insbesondere durch eine erhöhte Beständigkeit gegen Befall von Schimmelpilzen und anderen Mikroorganismen bei 25°C und 100% relativer Luftfeuchte gekennzeichnet. So sind die Holzfaserdämmstoffplatten in einem Zeitraum von mindestens zwei Wochen, bevorzugt von mindestens drei Wochen, insbesondere bevorzugt von mindestens vier Wochen stabil bzw. resistent gegenüber der Besiedlung mit Mikroorganismen und/oder Schimmelpilzen.

Die Erfindung wird nachfolgend an einem Ausführungsbeispiel näher erläutert.

### Beispiel 1

Die Wirksamkeit der Bindemittel-Mischung in einer Dämmstoffplatte im Vergleich zur alleinigen Verwendung von PMDI als Bindemittel wurde durch einen vergleichenden Test in einer Klimakammer bestimmt.

Zu diesem Zwecke wurden zwei Holzfaserdämmstoffplatten hergestellt, wobei ein erster Dämmstoff 8 Gew% PMDI und ein zweiter Dämmstoff 7,6 Gew% und 0,4 Gew% Polyimin jeweils bezogen auf die Masse an Holzfasern enthalten.

Bei der Herstellung der beiden Dämmstoffe wurde mit dem gleichen Produktionsparameter gearbeitet. Nach ihrer Herstellung wurden die beiden Dämmstoffe in zwei Klimakammern bei 25°C und 100% relativer Luftfeuchte gelagert.

Im Rhythmus von 2 Wochen werden die beiden Dämmstoffe visuell und olfactometrisch untersucht und verglichen.

Dabei zeigte sich, dass der Standarddämmstoff, der lediglich das Bindemittel PMDI enthält, bereits nach 2 Wochen einen deutlich erdigen Geruch besaß, der durch Geosmin hervorgerufen wird. Geosmin ist ein Stoffwechselprodukt von Schimmelpilzen und anderen Mikroorganismen und besitzt einen charakteristischen, erdigen Geruch.

Der Dämmstoff auf der Basis des neuen Bindemittelgemisches hingegen produzierte keinen durch Geosmin hervorgerufenen Geruch.

Nach 4 Wochen hatte sich der Geruch bei dem Standarddämmstoff mit PMDI weiter verstärkt und es waren zu dem erste gelbliche und bläulich gefärbte Schimmelpilze erkennbar.

Der zweite Dämmstoff mit dem erfindungsgemäßen Bindemittelgemisch zeigte hingegen weder den auffälligen Geruch noch waren Schimmelpilze auszumachen.

## Patentansprüche

1. Verwendung einer Zusammensetzung umfassend mindestens ein erstes und ein zweites Bindemittel als fungizides Holzschutzmittel für Holzfaserdämmstoffplatten
**dadurch gekennzeichnet, dass**
- das mindestens erste Bindemittel mindestens ein Isocyanat ist;
- das mindestens zweite Bindemittel ein Polyimin ist,
wobei das mindestens eine Isocyanat und das mindestens eine Polyimin in einem Mischungsverhältnis bezogen auf die Masse von 10:1 bis 50:1 eingesetzt werden,
und
- wobei die Zusammensetzung während des Herstellungsprozesses der Holzfaserdämmstoffplatte durch Inkontaktbringen von für die Herstellung der Holzfaserdämmstoffplatte verwendeten Holzfasern mit der Zusammensetzung unmittelbar in die Holzfaserdämmstoffplatte eingebracht wird.

2. Verwendung nach Anspruch 1, **dadurch gekennzeichnet, dass** das mindestens eine Isocyanat ausgewählt ist aus der Gruppe enthaltend aliphatische und aromatische Isocyanate.

3. Verwendung nach einem der Ansprüche 1 oder 2, **dadurch gekennzeichnet, dass** die Zusammensetzung polymeres Diphenlymethandiisocyanat (PMDI), Toluylendiisocyanat (TDI) und/oder Diphenylmethandiisocyanat (MDI) umfasst.

4. Verwendung nach einem der vorhergehenden Ansprüche, **dadurch gekennzeichnet, dass** die Zusammensetzung mindestens ein Polyalkylenimin als Polyimin umfasst, wobei die Stickstoffatome durch C₁-C₁₈, bevorzugt C₂-C₈ gesättigte, ungesättigte, geradlinige und/oder verzweigte Kohlenwasserstoffketten verbunden sind.

5. Verwendung nach einem der vorhergehenden Ansprüche, **dadurch gekennzeichnet, dass** die Zusammensetzung mindestens ein Polyethylenimin mit einem mittleren Molgewicht zwischen 300 und 10.000 g/mol, bevorzugt zwischen 500 und 5.000 g/mol, besonders bevorzugt von 800 g/mol, als Polyimin umfasst.

6. Verwendung nach einem der vorhergehenden Ansprüche, **dadurch gekennzeichnet, dass** das mindestens eine Isocyanat und das mindestens eine Polyimin in einem Mischungsverhältnis bezogen auf die Masse von 15:1 bis 40:1 eingesetzt werden.

7. Verwendung nach einem der vorhergehenden Ansprüche, **dadurch gekennzeichnet, dass** das mindestens eine Isocyanat und das mindestens eine Polyimin in einem Mischungsverhältnis bezogen auf die Masse von 18:1 zu 30:1 eingesetzt werden.

## Claims

1. Use of a composition comprising at least one first and one second binder as fungicidal wood preservative for wood fiber insulating boards,
**characterized in that**
- the at least first binder is at least one isocyanate;
- the at least second binder is a polyimine,
wherein the at least one isocyanate and the at least one polyimine are used in a mixing ratio based on the mass from 10:1 to 50:1, and
- wherein the composition is directly introduced into the wood fiber insulating board during the manufacturing process of the wood fiber insulating board by contacting the wood fibers used for the manufacturing of the wood fiber insulating board with the composition.

2. The use according to claim 1, **characterized in that** the at least one isocyanate is selected from the group including aliphatic and aromatic isocyanates.

3. The use according to one of claims 1 or 2, **characterized in that** the composition comprises polymeric diphenylmethane diisocyanate (PMDI), toluene diisocyanate (TDI) and/or diphenylmethane diisocyanate (MDI).

4. The use according to any of the preceding claims, **characterized in that** the composition comprises at least one polyalkylene imine as polyimine, wherein the nitrogen atoms are connected by C₁-C₁₈, preferably C₂-C₈ saturated, unsaturated, straight and/or branched hydrocarbon chains.

5. The use according to any of the preceding claims, **characterized in that** the composition comprises at least one polyethylene imine with a mean molar weight between 300 and 10,000 g/mol, preferably between 500 and 5,000 g/mol, particularly preferably of 800 g/mol, as polyimine.

6. The use according to any of the preceding claims, **characterized in that** the at least one first binder and the at least one polyimine are used in a mixing ratio based on the mass from 15:1 to 40:1.

7. The use according to any of the preceding claims, **characterized in that** the at least one first binder and the at least one polyimine are used in a mixing ratio based on the mass from 18:1 to 30:1.

## Revendications

1. Utilisation d'une composition comprenant au moins un premier et un deuxième liant comme produit de protection du bois fongicide pour des plaques de fibres de bois isolants,
**caractérisée en ce que**
- au moins le premier liant est au moins un isocyanate,
- au moins le deuxième liant est une polyimine,
dans laquelle l'au moins un isocyanate et l'au moins une polyimine sont utilisés avec un rapport de mélange basé sur la masse de 10 :1 à 50 :1, et
- la composition pouvant être appliquée immédiatement dans la plaque de fibres de bois isolant pendant le processus de fabrication de la plaque de fibres de bois isolant par mise en contact des fibres de bois utilisées pour la fabrication de la plaque de fibres de bois isolant avec la composition.

2. Utilisation selon la revendication 1, **caractérisée en ce que** l'au moins un isocyanate est choisi dans le groupe comprenant des isocyanates aliphatiques et aromatiques.

3. Utilisation selon la revendication 1 ou 2, **caractérisée en ce que** la composition comprend un diphénylméthanediisocyanate polymère (PMDI), un toluylènediisocyanate (TDI) et/ou un diphénylméthanediisocyanate (MDI).

4. Utilisation selon l'une des revendications précédentes, **caractérisée en ce que** la composition comprend au moins une polyalkylène-imine en tant que polyimine, les atomes d'azote étant liés par des chaînes hydrocarbure saturées, insaturées, linéaires et/ou ramifiées en C₁ à C₁₈, de préférence C₂ à C₈.

5. Utilisation selon l'une des revendications précédentes, **caractérisée en ce que** la composition comprend au moins une polyéthylène-imine présentant un poids moléculaire moyen entre 300 et 10 000 g/mole, de préférence entre 500 et 5000 g/mole, de manière particulièrement préférée, de 800 g/mole, en tant que polyimine.

6. Utilisation selon l'une des revendications précédentes, **caractérisée en ce que** l'au moins isocyanate et l'au moins une polyimine sont utilisés avec un rapport de mélange basé sur la masse de 15:1 à 40:1.

7. . Utilisation selon l'une des revendications précédentes, **caractérisée en ce que** l'au moins isocyanate et l'au moins une polyimine sont utilisés avec un rapport de mélange basé sur la masse de 18:1 à 30:1.
